(19) Europäisches Patentamt

European Patent Office

Office européen des brevets

(11) Publication number: **0 274 874 B1**

(12) **EUROPEAN PATENT SPECIFICATION**

(45) Date of publication of patent specification: **04.03.92**　(51) Int. Cl.5: **F16H 57/08**

(21) Application number: **87310954.0**

(22) Date of filing: **14.12.87**

(54) **Planet gear carrier assembly.**

(30) Priority: **12.01.87 US 2376**

(43) Date of publication of application:
**20.07.88 Bulletin 88/29**

(45) Publication of the grant of the patent:
**04.03.92 Bulletin 92/10**

(84) Designated Contracting States:
**DE FR GB IT**

(56) References cited:
**CH-A- 147 888**
**DE-B- 2 855 545**
**GB-A- 1 556 975**
**US-A- 3 539 035**

**R. DOMAYER, A. FRISCHHERZ "Die norm-
gerechte Werkzeichnung", II. Teil:
"Darstellung von genormten Maschinen-
teilen und praktisches Zeichnen", 1976 VER-
LAG DES ÖSTERREICHISCHEN GEWERK-
SCHAFTSBUNDES, Wien**

(73) Proprietor: **GENERAL MOTORS CORPORA-
TION
General Motors Building 3044 West Grand
Boulevard
Detroit Michigan 48202(US)**

(72) Inventor: **Fuehrer, Reece R.
51 North Road 200 East
Danville Indiana 46122(US)**

(74) Representative: **Denton, Michael John et al
Patent Section Vauxhall Motors Limited 1st
Floor Gideon House 26 Chapel Street
Luton Bedfordshire LU1 2SE(GB)**

Rank Xerox (UK) Business Services

## Description

This invention relates to a planet gear carrier assembly as specified in the preamble of claim 1, for example as disclosed in DE-B-2855545.

Planetary carrier assemblies have generally been designed to either permit rotation of the spindles for the pinion gears or prevent rotation thereof. When the intention was to prevent rotation of the spindles, these spindles were generally welded or staked in the carrier cage member to prevent such rotation. These manufacturing techniques are effective to prevent rotation, but as a general rule they make it impossible for the carrier assembly to be repaired without significant reworking. The arrangement in DE-B-2855545 goes part of the way to overcoming these problems, but provides an assembly which is complicated to manufacture.

The present invention seeks to overcome this drawback by making it possible to easily remove the spindles from a planet carrier assembly, so facilitating repair of the spindles, the gears or the bearings. After such repair, re-assembly of the planet carrier does not require special assembly equipment.

To this end a planet gear carrier assembly in accordance with the present invention is characterised by the features specified in the characterising portion of claim 1.

The invention thereby makes available a planet gear carrier assembly wherein the planet gears are rotatably mounted on spindles that are disposed in the planet carrier, the planet carrier has a pair of spaced sidewalls one of which has a stepped-diameter bore and the other of which has a single-diameter bore in which the spindle is assembled, and the spindle has a flatted section which co-operates with a locking ring secured in one sidewall such that longitudinal and rotary displacement of the spindle is prevented.

The invention also makes available an improved planet gear carrier assembly wherein the spindles on which the planet gears are rotatably mounted are disposed in bores formed in the planet carrier having a stepped diameter at one end thereof, and a locking ring is secured in a groove formed in the carrier at a location longitudinally displaced from the stepped-diameter portion and co-operates with a flatted portion and an oil shield to secure the spindle within the stepped diameter, thereby limiting both longitudinal and rotational displacement of the spindle and providing for the directing of a lubrication fluid to a centrally disposed lube passage formed in the spindle. Such a planet gear carrier assembly not only permits ready repair of the carrier but also improves lubrication.

In the drawing:

Figure 1 is a fragmentary sectional view, with parts in elevation, of a preferred embodiment of a planet gear carrier assembly in accordance with the present invention;

Figure 2 is a fragmentary view on the line 2--2 of Figure 1, in the direction of the arrows; and

Figure 3 is an enlarged fragmentary sectional view, with parts in elevation, illustrating a portion of another embodiment of a planet gear carrier assembly in accordance with the present invention.

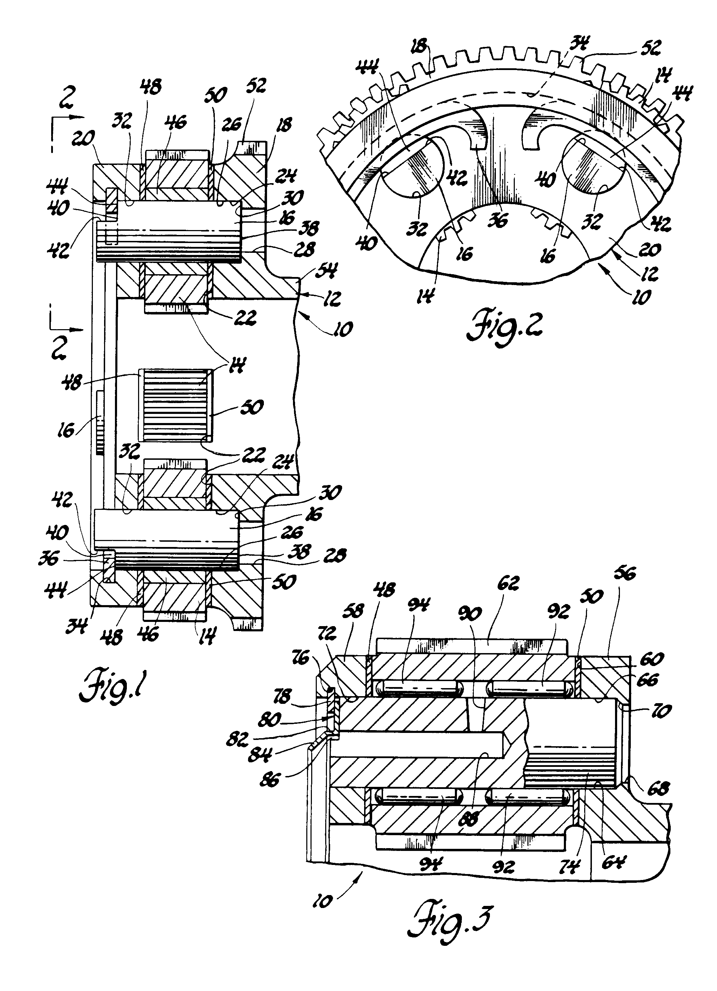

With reference now to the drawing, wherein like characters refer to similar or corresponding parts throughout the several views, there is shown in Figure 1 a planet gear carrier assembly 10 which includes a cage 12, a plurality of pinion gears 14, and a plurality of spindles 16 each rotatably supporting a respective pinion gear 14.

The cage 12 has a pair of sidewalls 18 and 20 which can be either formed integrally or secured together by a plurality of fasteners. For the purpose of this disclosure, the sidewalls will be considered to be integrally formed. In either event, the sidewalls 18 and 20 are spaced to provide a plurality of spaces 22 in which the pinion gears 14 are disposed. The sidewall 18 has a stepped-diameter bore 24 comprising a large diameter 26 and a small diameter 28 which are joined by means of a shoulder section 30.

The sidewall 20 has a single-diameter bore 32 that is formed coaxially with the stepped-diameter bore 24 and is preferably of the same diameter as the large diameter 26. Also formed in the sidewall 20 is a groove 34 which entraps or otherwise co-operates with a locking ring 36.

The spindles 16 are disposed in the single-diameter bore 32 and the large diameter 26 of the stepped-diameter bore 24. The spindles are preferably a line-to-line fit or a light press fit with the bores 32 and 24. Each spindle has an end 38 which abuts the shoulder 30 to limit the axial movement of the spindles in the rightward direction as viewed in Figure 1. The other end of each of the spindles 16 has a cutout portion 40 which results in both a longitudinal flat surface 42 and a radially extending flat surface 44.

The radially extending flat surface 44 is in axial abutment with the locking ring 36, such that axial movement of the spindles 16 in the leftward direction is limited. The longitudinal flat surface 42 is disposed in close proximity with the inner surface of the locking ring 36, to thereby limit the rotational displacement of the spindles 16. The clearance between the flat surface 42 and the inner surface of the locking ring 36 is sufficient to permit installation of the locking ring 36 in the groove 34.

Each spindle 16 has a bushing (plain bearing) 46 disposed thereon which permits the pinion gear 14 to rotate freely. Also disposed in the spaces 22 are a pair of thrust bearings 48 and 50 which support the axial forces imposed on the pinion gears 14 during operation in a planetary gear arrangement.

The described bearing and thrust-bearing structures are of a very well-known type, utilised in most planetary gear systems. As is well-known in planetary gear systems, the pinion gears 14 will mesh with both a sun gear and a ring gear so as to provide a complete planetary gear arrangement.

In such arrangements, it is desirable either to restrain the carrier from rotation or to secure it to a rotating member for simultaneous rotation therewith. The carrier assembly 10 therefore, includes a spline 52 that is disposed on the outer surface of the sidewall 18 and might be connected to a conventional friction clutch or brake member, or to a toothed hub which would in turn be secured to another element within the planetary transmission.

In the alternative, the spline 52 could be eliminated, and connection to the carrier assembly 10 be made by way of a hub portion 54 formed on the sidewall 18. Alternatively, connections could be made both at the spline 52 and at the hub portion 54.

In Figure 3 there is shown an alternative embodiment of the planet gear carrier assembly 10. This planet carrier assembly 10 likewise has sidewalls 56 and 58 that are spaced to provide openings 60 in which are disposed pinion gears 62. The sidewall 56 has a stepped-diameter bore 64 in which a large diameter 66 and a small diameter 68 are interconnected by an angled (bevelled) surface 70. The sidewall 58 has a single-diameter bore 72 coaxial with the stepped diameter 64, such that a spindle 74 is supported in the diameters 72 and 64.

The sidewall 58 has a locking ring groove 76 in which is disposed a locking ring 78. The locking ring 78 in turn positions an oil shield (lube directing ring) 80 which has an annular wall portion 82 and a funnel-like frusto-conical portion 84. The annular wall portion 82 is disposed adjacent a longitudinal flat 86 that is formed on the spindle 74.

The spindle 74 has a central fluid passage 88 which extends from the left-hand end thereof to a point approximately half-way along the length of the spindle. One or more radial passages, such as 90, communicate fluid in the central passage 88 with the outer surface of the spindle 74. Between the outer surface of the spindle 74 and the pinion gear 62 there are disposed a plurality of needle or roller bearings 92 and 94. Lubrication for these bearings is provided by oil distributed by co-operation of the oil shield 80 and the passages 88 and 90.

During operation of the carrier assembly, lubrication fluid is splashed or otherwise propelled radially outwardly from lubrication ports, not shown, by rotating members such as shafts and gears. This outwardly propelled fluid is collected by the oil shield 80, and is directed into the passage 88, from which it is dispensed by way of passage 90 to the bearings 92 and 94.

The stepped-diameter bore 64 limits the longitudinal movement of the spindle 74 in the rightward direction as viewed in Figure 3, and the oil shield 80 co-operates with the left-hand end of the spindle 74 and the longitudinal flat portion 86 to limit both leftward movement of the spindle 74 and rotational displacement thereof.

The planet gear carrier assembly 10 of Figure 3 also utilises thrust bearings 48 and 50 similar to those used with the assembly of Figure 1. The use of needle or roller bearings, as shown in Figure 3, rather than a bushing, as shown in Figure 1, necessitates the positive-lubrication bearing mechanism that is shown in Figure 3.

Both lubrication and movement limitations are provided by co-operation of the oil shield 80 and the locking ring 76. It will be evident that the planet gear carrier assembly of either Figure 1 or Figure 3 is easily disassembled by removal of the respective locking rings 36 or 78, with subsequent light pressing of the spindles 16 and 74 to permit removal of the pinion gears and the respective bearings.

The assemblies may be re-assembled utilising the same spindles and locking rings, and worn parts such as bearings, thrust washers and gears may be replaced. No special tools are required other than a pair of pliers and a bench press for the disassembly and re-assembly of planet gear carrier assemblies in conformity with the present invention.

**Claims**

1. A planet gear carrier assembly comprising a planet cage (12) having spaced sidewalls (18 and 20); a plurality of spindle bores (26,32) formed in the sidewalls (18 and 20) and each having a constant-diameter portion (32) through one (20) of the sidewalls (18 and 20); a plurality of spindles (16) disposed in the respective bores (26,32); gear means (14) rotatably disposed on each of the spindles (16); a cut-out portion (40) having a longitudinally extending surface (42) and a radially extending surface (44) formed on each of the spindles (16) adjacent the respective constant-diameter portion (32); a groove (34) formed in the said one sidewall (20); and retaining ring means (36) disposed in the groove (34) and extending radially inwardly in close proximity to the cut-out portion (40) and co-operating with the longitudinally extending surface (42) for limiting the extent of rotary movement of the spindles (16) and co-operating with the radially extending surface (44) for limiting axial movement of the spindles (16) in one longitudinal direction; characterised in that the spindle bores (26,32) each have, coaxial with the constant-diameter portion (32), a stepped-diameter portion (24) in the other sidewall (18), whereby axial movement of the spindles (16) is limited in the other longitudinal direction by the respective stepped-diameter portions (24); in that the cut-out portion (40) is formed at one end of each spindle (16) with the longitudinally extending surface (42) extending to said end; and in that the retaining ring means (36) is positioned radially outwards of the spindles.

2. A planet gear carrier assembly according to claim 1, wherein each spindle (74) includes a centrally disposed lubrication passage (88,90); the gear means (62) includes bearing means (92,94); and the retaining ring means comprises locking means (78) disposed in the groove (76) and an oil shield (80) which extends radially inwardly in close proximity to the cut-out portion (86), the oil shield (80) including a frusto-conical portion (84) for directing fluid to the lubrication passage (88), a circumferentially extending wall (82) co-operating with the longitudinally extending surface for limiting the extent of rotary movement of the spindles (74), and a radially extending annular portion (82) co-operating with the radially extending surface for limiting the axial movement of the spindles (74) in the said one longitudinal direction.

**Revendications**

1. Ensemble porte-satellites comportant une cage (12) à satellites comprenant des plateaux latéraux (18 et 20) espacés l'un de l'autre ; une série d'alésages (26, 32) d'axes, ces alésages étant réalisés dans les plateaux latéraux (18 et 20) et comprenant chacun une partie (32) de diamètre constant traversant un premier (20) des plateaux latéraux (18 et 20) ; une série d'axes (16) disposés dans les alésages correspondants (26, 32) ; des engrenages (14) disposés de façon à pouvoir tourner sur chacun des axes (16) ; un décrochement (40) comprenant une face (42) s'étendant longitudinalement et une face (44) s'étendant radialement, réalisés sur chacun des axes (16) de façon adjacente à la partie correspondante (32) de diamètre constant ; une gorge (34) pratiquée dans ledit premier plateau latéral (20) ; un dispositif à anneau (36) d'arrêt disposé dans la gorge (34), s'étendant radialement vers l'intérieur à proximité directe du décrochement (40) et agissant en conjonction avec le méplat longitudinal (42) de manière à limiter l'amplitude du mouvement rotatoire des axes (16), et agissant en conjonction avec la face (44) qui s'étend radialement de manière à limiter le mouvement axial des axes (16) dans un premier sens ; caractérisé en ce que les alésages (26, 32) récepteurs des axes comportent chacun un alésage étagé (24) coaxial par rapport à la partie (32) de diamètre constant, réalisé dans l'autre plateau latéral (18), permettant de limiter le mouvement axial des axes (16) dans l'autre sens longitudinal par l'intermédiaire des parties étagées (24) ; en ce que le décrochement (40) est réalisé à l'une des extrémités de chaque axe (16), la face s'étendant longitudinalement (42) s'étendant jusqu'à cette extrémité ; et en ce que le dispositif (36) à anneau d'arrêt est positionné radialement à l'extérieur des axes.

2. Ensemble porte-satellites selon la revendication 1, caractérisé en ce que chaque axe (74) comporte un passage (88, 90) de lubrification disposé de façon centrale dans l'axe ; en ce que les engrenages (62) comportent des paliers (92, 94) ; et en ce que le dispositif à anneau d'arrêt comporte un dispositif (78) d'arrêt placé dans la gorge (76) et un déflecteur d'huile (80) s'étendant radialement vers l'intérieur à proximité directe du décrochement (86), le déflecteur d'huile (80) comportant une partie tronconique (84) destinée à guider le fluide vers le passage (88) de lubrification, une paroi circonférentielle (82) interagissant avec la face qui s'étend longitudinalement de manière à limiter l'amplitude du mouvement rotatoire des axes (74), et une partie annulaire s'étendant radialement, interagissant avec la face qui s'étend radialement de manière à limiter le mouvement axial des axes (74) dans ledit premier sens.

**Patentansprüche**

1. Planetenradträger-Anordnung, welche umfaßt einen Planetenkäfig (12) mit voneinander einen Abstand aufweisenden Seitenwänden (18 und 20); eine Vielzahl von in den Seitenwänden (18 und 20) ausgebildeten Spindelbohrungen (26, 32), die jeweils einen Abschnitt (32) konstanten Durchmessers in einer (20) der Seitenwände (18 und 20) besitzen; eine Vielzahl von in den jeweiligen Bohrungen (26, 32) angeordneten Spindeln (16); drehbar an jeder Spindel (16) angeordnete Zahnradmittel (14); einen Ausschnitt (40) mit einer sich in Längsrichtung erstreckenden Fläche (32) und einer sich radial erstreckenden Fläche (44), der an jeder Spindel (16) benachbart dem jeweiligen Abschnitt (32) konstanten Durchmessers ausgebildet ist; eine (32) in der einen Seitenwand (20) ausgebildete Nut; und in der Nut (34) eingesetztes und sich radial nach innen in enge Nachbarschaft zu dem Ausschnitt (40) und mit der sich in Längsrichtung erstreckenden Fläche (42) zusammenwirkend angeordnetes Halteringmittel (36) zum Begrenzen des Ausmaßes der Drehbewegung der Spindeln (16) und mit der sich radial erstreckenden Fläche (44) zusammenwirkend zum Begrenzen von Axialbewegung der Spindeln (16) in einer Längsrichtung; dadurch gekennzeichnet, daß die Spindelbohrungen (26, 32) jeweils einen zu dem Abschnitt (32) konstanten Durchmessers koaxialen Abschnitt (24) gestuften Durchmessers in der anderen Seitenwand (18) besitzen, wodurch Axialbewegung der Spindeln (16) in der anderen Längsrichtung durch die jeweiligen Abschnitte (24) gestuften Durchmessers begrenzt ist; daß der Ausschnitt (40) an einem Ende jeder Spindel (16) ausgebildet ist mit sich zu dem Ende hin erstreckender Längserstreckungsfläche (42) und daß das Halteringmittel (36) radial außerhalb der Spindeln angeordnet ist.

2. Planetenradträger-Anordnung nach Anspruch 1, bei der jede Spindel (74) einen zentral angeordneten Schmierdurchlaß (88, 90) enthält; das Zahnradmittel (62) Lagermittel (92, 94) enthält; und das Halteringmittel in die Nut (76) eingesetzte Sperrmittel (78) umfaßt und eine Ölabschirmung (80), die sich radial nach innen in enge Nachbarschaft zu dem Ausschnitt (86) erstreckt, wobei die Ölabschirmung (80) einen kegelstumpfförmigen Abschnitt (84) enthält, um Fluid zu dem Schmierungsdurchlaß (88) zu richten, eine sich in Umfangsrichtung erstreckende Wand (82), die mit der sich in Längsrichtung erstreckenden Fläche zur Begrenzung des Ausmaßes der Drehbewegung der Spindeln (74) zusammenwirkt, und einen sich radial erstreckenden Ringabschnitt (82), der mit der sich radial erstreckenden Fläche zur Begrenzung der Axialbewegung der Spindeln (74) in der einen Längsrichtung zusammenwirkt.

Fig.2

Fig.1

Fig.3